# EUROPEAN PATENT SPECIFICATION

(11) **EP 2 248 678 B1**
(45) Date of publication and mention of the grant of the patent: **04.11.2015**
(21) Application number: 09705027.2
(22) Date of filing: 28.01.2009
(51) Int. Cl.: B60B 17/00, B61F 3/12, B61F 3/16, B61F 5/00, B61F 13/00

(54) **WHEEL UNIT, RAILWAY BOGIE, RAILWAY VEHICLE, AND RAILWAY SYSTEM**
RADEINHEIT, EISENBAHNDREHGESTELL, EISENBAHNWAGEN UND EISENBAHNSYSTEM
UNITÉ DE ROUE, BOGIE FERROVIAIRE, VÉHICULE FERROVIAIRE, ET SYSTÈME FERROVIAIRE

(30) Priority: 28.01.2008 JP 2008015895
(43) Date of publication of application: 10.11.2010
(73) Proprietor: The University of Tokyo, Bunkyo-ku, Tokyo 113-8654 (JP)
(72) Inventor: SUDA, Yoshihiro, Tokyo 113-8654 (JP); WANG, Wenjun, Tokyo 113-8654 (JP); MICHITSUJI, Yohei, Tokyo 113-8654 (JP)
(74) Representative: Tomlinson, Kerry John
(86) International application number: PCT/JP2009/000329
(87) International publication number: WO 2009/096178

(56) References cited:
- DE-C- 653 533
- GB-A- 827 846
- JP-A- 61 160 354
- JP-A- 2001 294 156
- JP-A- 2001 341 502
- JP-A- 2005 200 021
- JP-A- 2006 232 097
- JP-A- 2007 196 933
- JP-Y2- 58 050 939
- JP-Y2- 62 025 509
- US-A- 4 095 531

## Description

### Technical Field

The present invention relates to a wheel unit including an axle and wheels, a bogie into which the wheel unit is incorporated, and a railway vehicle and a railway system including the bogie and the vehicle body, and more particularly to those for an LRT (Light Rail Transit) vehicle or the like requiring a characteristic having quick curving performance.

### Background Art

A railway vehicle requires curving performance and running stability, and the curving performance is exerted by a self-steering function based on the inclination of a tread of a wheel. The self-steering function can be improved by allowing free turning (yawing) of wheels and an axle, but allowing the free turning of the wheels and the axle causes nosing that is self-excited vibration to prevent running stability.

To improve the self-steering function, an independently rotating bogie is advantageous including an independently rotatable wheel unit (axle and wheels) provided on each of the left and right of a bogie frame. As conventional techniques on such an independently rotating bogie, Patent Document 1, Patent Document 2, and Non-patent Document 1 are known.

Patent Document 1 discloses a structure in which axle beams are coupled via two links to the left and right of a squared U-shaped bogie frame, the left and right axle beams rotatably support left and right wheels, and further a link in a width direction couples the left and right axle beams. Non-patent Document 1 discloses basic matters on an independently rotating bogie.

Patent Document 2 proposes, based on the contents of Patent Document 1 and Non-patent Document 1, that a steering assist actuator such as an electromagnetic damper is placed to eliminate delay to following wheels with respect to a curve.

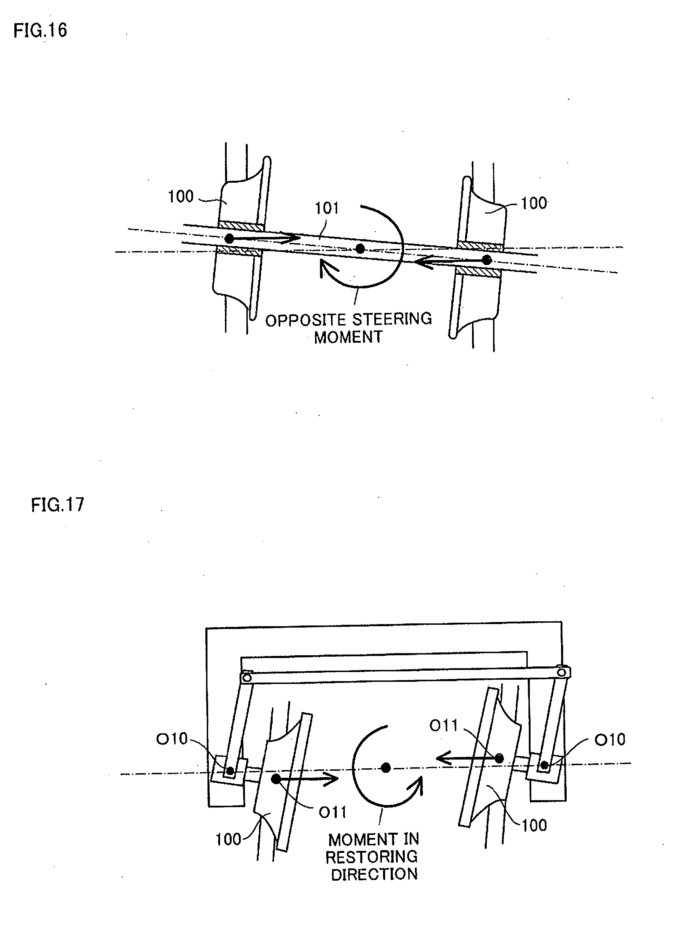

Figure 16 is a schematic diagram of a self-steering bogie including conventional wheels 100 provided at opposite ends of one axle 101, each wheel having a tread inclined so that a radius on an inner side is gradually increased. When a yaw angle occurs in the bogie, an opposite steering moment acts in a direction of increasing the yaw angle, which makes the bogie unstable like an inverted pendulum. Thus, for this type of self-steering bogie, a flange portion provided on the wheel prevents an increase in the yaw angle, and in some cases, an actuator is used to forcibly apply a moment in a restoring direction.

The structure shown in Figure 16 is unstable, and the moment needs to be forcibly applied in the restoring direction. Thus, in Patent Document 1, Patent Document 2, and Non-patent Document 1, as shown in Figure 17, a center of rotation O₁₀ in a yaw direction of a wheel 100 is placed on an outer side of a contact point O₁₁ between a tread and a rail, and thus a mechanism of an inverted pendulum is altered into a mechanism of a correct pendulum to provide an inward gravitational restoring force, thereby exerting a stable self-steering function.

DE 653533 discloses a wheel for rail vehicles with curved flanges on the inner and outer rims, and a straight section disposed therebetween.
Patent Document 1: Japanese Patent Laid-Open No. 2002-302038
Patent Document 2: WO2006/075756
Non-patent Document 1: Fritz Frederich, Possibilities as yet unknown or unused regarding the wheel/rail tracking mechanism, Development of modem rolling stock running gear, Rail International, November 1985, p33

### Disclosure of the Invention

### Problems to be Solved by the Invention

The bogies disclosed in Patent Documents 1 and 2 and Non-patent Document 1 require a rotary joint or a steering link, and a complicated mechanism is undesirable in terms of practical use such as cost or maintenance.

The bogies disclosed in Patent Documents 1 and 2 and Non-patent Document 1 have a disadvantage such that when the bogies turn on a track with an extremely small radius of curvature such as an LRV (Light Rail Vehicle), a characteristic of a steering link mechanism prevents ideal curving at an attack angle of 0 due to a reduction in a back gauge of wheels on opposite sides and a difference between radii of curvature of inner and outer track rails.

### Means for Solving the Problems

To solve the above-described problems, a wheel unit according to the present invention includes one axle and wheels, the wheels are mounted to opposite ends of the axle rotatably independently of each other, a tread of each wheel in contact with a rail is inclined so that a radius is gradually increased outward with reference to the rail, and a lateral gravitational restoring force generated at a contact point between the rail and the tread during running acts outward with reference to the rail, characterised in that a shape of the tread is set so that when the wheel unit is laterally displaced from a neutral position, a center of gravity position in the laterally displaced position is higher than a center of gravity position in the neutral position.

Thus gravity acts in a direction returning to the neutral position.

A wheel unit according to the present invention includes two axles coaxially spaced apart and wheels, the wheels are mounted to the axles, respectively, rotatably independently of each other, a tread of each wheel in contact with a rail is inclined so that a radius is gradually increased outward with reference to the rail, and a lateral gravitational restoring force generated at a contact point between the rail and the tread during running acts outward with reference to the rail, characterised in that a shape of the tread is set so that when the wheel unit is laterally displaced from a neutral position, a center of gravity position in the laterally displaced position is higher than a center of gravity position in the neutral position. The term "coaxially" means that the two axles match a common axis in a neutral state where no unbalanced force acts on the members that constitute the wheel unit. Thus, when a suspension is interposed between a frame and an axle box, axes of the two axles do not match during running in some cases, but in such cases, the axles are coaxial in the present invention.

The tread is inclined in a direction opposite to that of a conventional tread as described above, and thus the lateral gravitational restoring force acts in a direction of reducing a yaw angle.

A flange portion for preventing derailment may be provided on an inner or outer side of the wheel with reference to the rail. When the flange portion is provided on the outer side, the rail at a switch point needs to be improved.

The present invention also includes a bogie, a railway vehicle, and a railway system to which the above-described wheel unit is applied.

### Advantage of the Invention

In the self-steering bogie according to the present invention, the lateral gravitational restoring force generated at a contact point between the rail and the tread acts outward, the gravitational restoring force acts in the direction of reducing the yaw angle, and thus a stable self-steering function can be exerted with a mechanism of a correct pendulum.

Also, the shape of the tread is further improved to allow the lateral displacement to be automatically corrected.

The self-steering bogie according to the present invention can achieve the above-described function with a simple structure without providing a complicated mechanism such as a steering link or a rotary joint.

### Brief Description of the Drawings

Figure 1(a) is a plan view of a wheel unit according to the present invention, Figure 1 (b) is a front view of a neutral state, Figure 1 (c) is a front view of the wheel unit laterally displaced;
Figure 2 is a plan view of a state where the wheel unit shown in Figure 1 is supported by a frame;
Figure 3(a) is a plan view of a wheel unit according to another embodiment, Figure 3(b) is a front view of a neutral state;
Figure 4 is plan view of a self-steering bogie according to a further embodiment;
Figure 5 shows a curved portion of a track on which the wheel unit according to the present invention runs;
Figures 6(a) and 6(b) are plan views of a point switch portion applied to the self-steering bogie (both for an outer flange and an inner flange) shown in Figure 4;
Figures 7(a) and 7(b) are plan views of a further embodiment of a point switch portion applied to a self-steering bogie (only for an outer flange);
Figures 8(a) and 8(b) are plan views of an on-vehicle branch portion applied to the bogie for the outer flange;
Figures 9(a) and 9(b) are plan views of a point switch portion both for an outer flange and an inner flange;
Figures 10(a) and 10(b) are plan views of a further embodiment of a point switch portion for both an outer flange and an inner flange;
Figure 11(a) is a plan view of a vehicle to which the self-steering bogie according to the present invention is mounted, Figure 11 (b) is a side view thereof;
Figure 12(a) is a plan view of a vehicle to which the self-steering bogie according to the present invention is mounted, Figure 12(b) is a side view thereof;
Figure 13(a) is a plan view of a railway vehicle according to the present invention, Figure 13(b) is a side view thereof;
Figure 14 is a plan view of a drive bogie placed at a joint between railway vehicles shown in Figure 13;
Figure 15(a) is a plan view when a drive wheel is provided, Figure 15(b) is a plan view showing a curving state;
Figure 16 is a plan view of a conventional self-steering bogie of one axle type; and
Figure 17 is a plan view of a conventional self-steering bogie including independently rotating wheels.

### Description of Symbols

- 1: axle
- 2: sleeve
- 3: wheel
- 4: rail
- 5: tread
- 6: flange portion
- 7: rail for main track
- 8: rail for branch track
- 9: tongue rail portion
- 10: switch rail
- 11: vehicle
- 12: drive bogie
- 13: hydraulic cylinder
- 14: drive wheel
- 15: link
- 20: frame
- 21: axle box
- 41: derailment prevention guard rail
- P1, P2: wheel load
- F1, F2: gravitational restoring force
- G1, G2: center of gravity position
- O1, O2, O3: center of rotation
- M: moment in a direction of eliminating displacement in a yaw direction

### Best Mode for Carrying Out the Invention

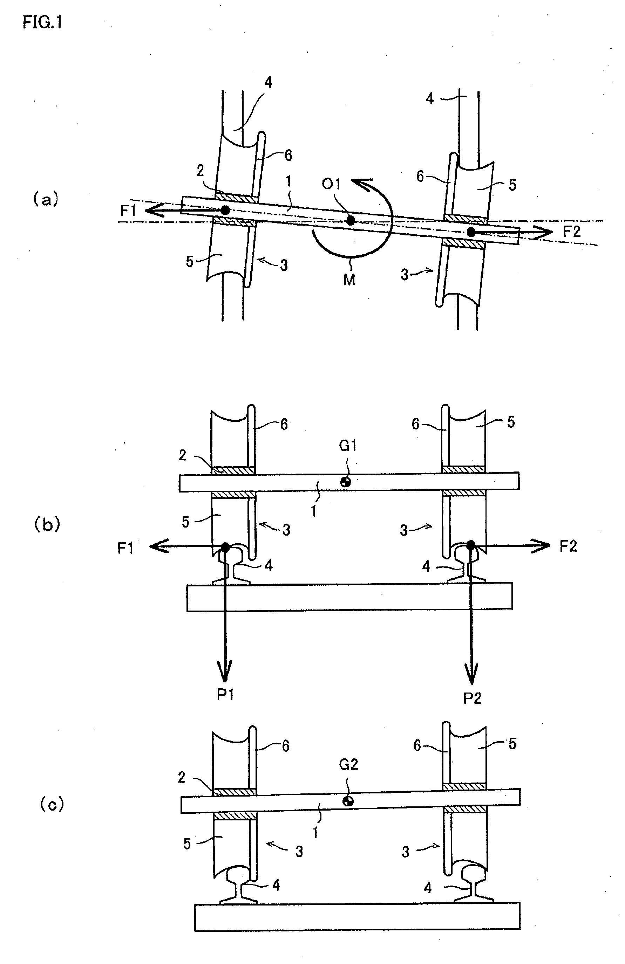

Now, the best mode for carrying out the present invention will be described in detail with reference to the drawings. Figure 1(a) is a plan view of a wheel unit according to the present invention, Figure 1(b) is a front view of a neutral state, and Figure 1(c) is a plan view of the wheel unit laterally displaced. In the wheel unit, wheels 3 and 3 are independently rotatably mounted via sleeves 2 to opposite ends of an axle 1.

A tread 5 of each wheel 3 in contact with a rail 4 is inclined so that a radius of rotation is gradually increased outward with reference to the rail, and has a flange portion 6 formed at an inner edge. In the present invention, the tread is inclined in a direction opposite to a conventional tread, and gravitational restoring forces F1 and F2 generated by wheel loads P1 and P2 are oriented outward with reference to the rail as shown.

Thus, when displacement in a yaw direction as shown occurs, the gravitational restoring forces F1 and F2 generate a moment M in a direction of eliminating the displacement in the yaw direction with respect to a center O1 of a bogie. The moment M is a self-steering moment that causes the bogie to follow the rail 4.

When the wheel unit is displaced from a neutral position shown in Figure 1(b) to the left or right as shown in Figure 1(c), the center of gravity position also changes from G1 to G2. Vertical movement of the center of gravity position depends on a shape of the tread 5. The shape of the tread is determined so that when the wheel unit is laterally displaced from the neutral position, the center of gravity position moves upward. Thus, even if the wheel unit is laterally displaced, the wheel unit is returned to the neutral position by gravity.

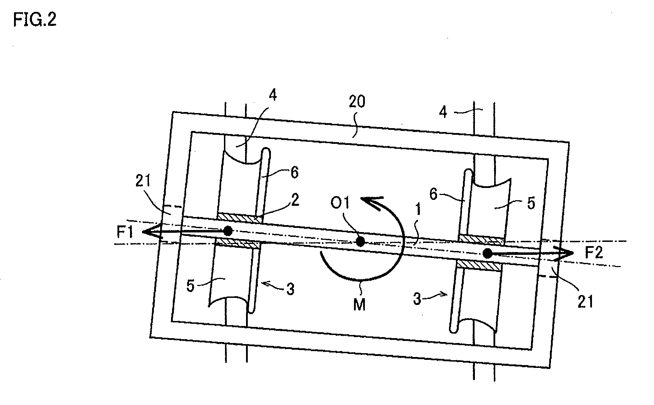

Figure 2 is a plan view of a self-steering bogie in which the wheel unit shown in Figure 1 is supported by a frame 20. In this embodiment, an axle box 21 of the frame 20 supports the opposite ends of the axle 1.

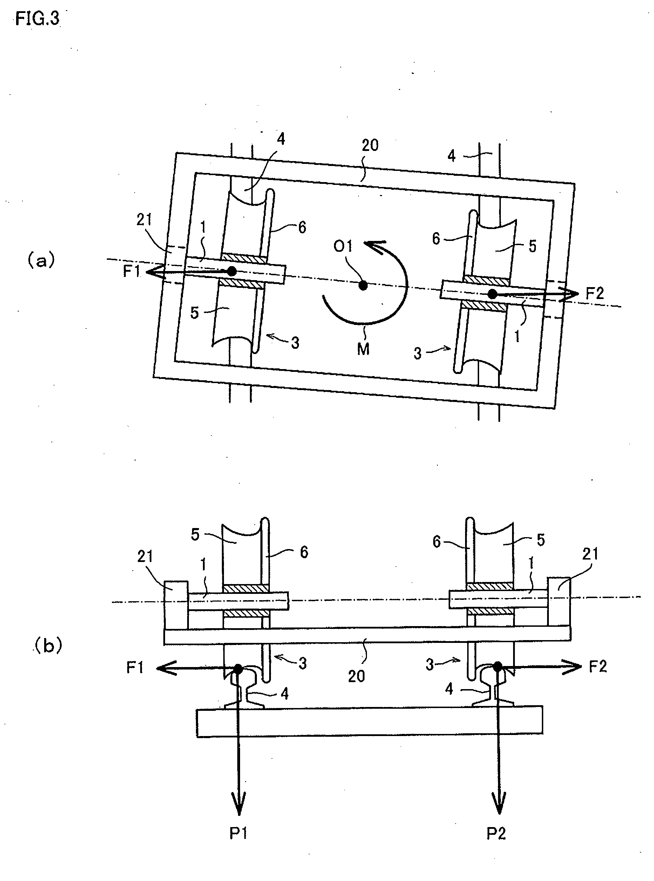

Figure 3(a) is a plan view of a wheel unit according to another embodiment and Figure 3(b) is a front view thereof. In this embodiment, two axles 1 and 1 having a common axis in a neutral position are provided rather than one axle 1. Providing the two axles eliminate an axle at the middle of a bogie, and thus can lower the floor surface of a vehicle, which is suitable for a low floor vehicle.

Also in this embodiment, a moment M in a direction of eliminating displacement in a yaw direction is generated as in the above-described embodiment. Also, a shape of a tread 5 is determined so that even if the wheel unit is laterally displaced, the wheel unit is returned to the neutral position by gravity.

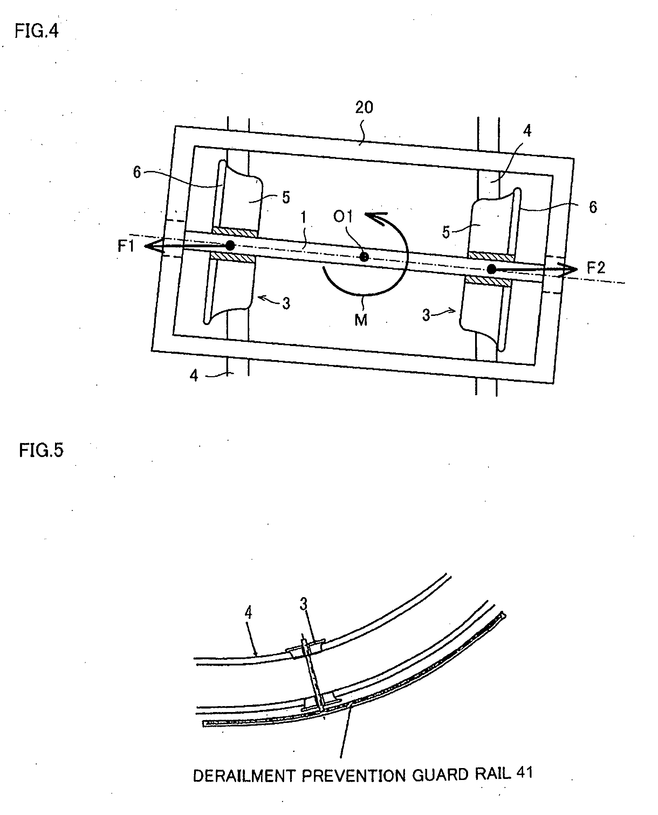

Figure 4 is plan view of a self-steering bogie according to a further embodiment. In this embodiment, a flange portion 6 of a wheel is provided at an outer end. If a derailment prevention guard is required when the flange portion 6 is provided at the outer end, a derailment prevention guard rail 41 can be further provided on an outer side of an outer track rail at a curved portion as shown in Figure 5.

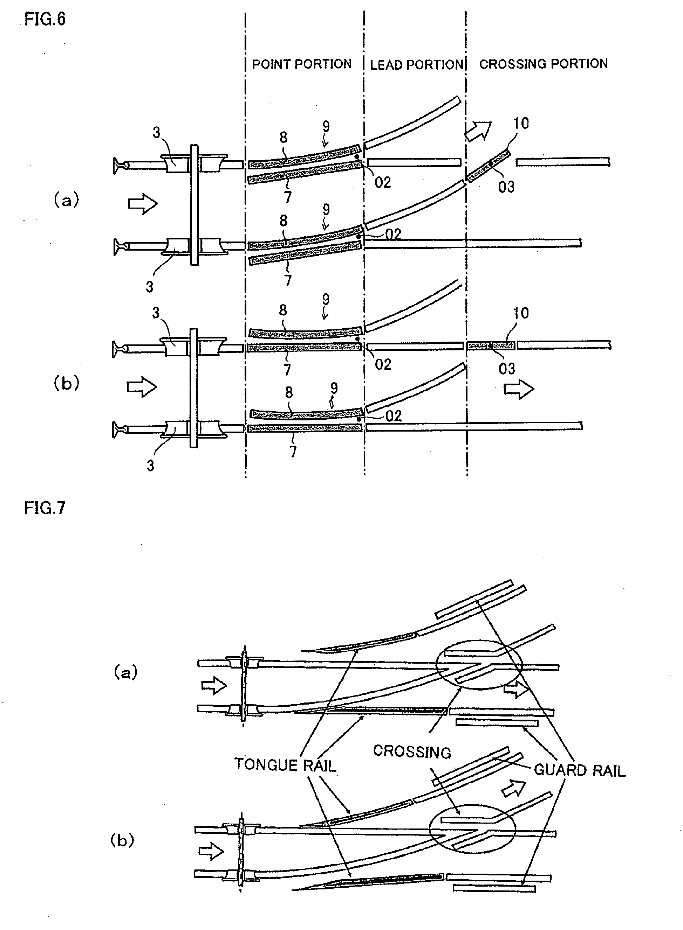

When the flange portion 6 is provided at the outer end, the flange portion 6 has the same function as that in the above-described embodiment, but the conventional structure of a switch point cannot be used, and a structure shown in Figure 6 or 7 is used.

Specifically, in the structure shown in Figure 6, a tongue rail portion 9 including a rail 7 for a main line and a rail 8 for a branch line is placed in a point portion, and a switch rail 10 is placed in a crossing portion. When the vehicle runs on the branch line, as shown in Figure 6(a), the tongue rail portion 9 is rotated around an axle 02 to move the rail 8 to a wheel passing position, and the switch rail 10 is rotated around an axle 03 to move the switch rail 10 to a wheel passing position. When the vehicle runs on the main line, as shown in Figure 6(b), the tongue rail portion 9 is rotated around the axle 02 to move the rail 7 to a wheel passing position, and the switch rail 10 is rotated around the axle 03 to move the switch rail 10 to a wheel passing position. The structure shown in Figure 6 can be applied to an inner flange type, not limited to the outer flange type.

In the structure shown in Figure 7, left and right tongue rail portions are constituted by one rail, a gap through which an outer flange can pass is formed in a crossing portion, and a guard rail is further placed on an outer side of an outer track rail of the crossing portion.

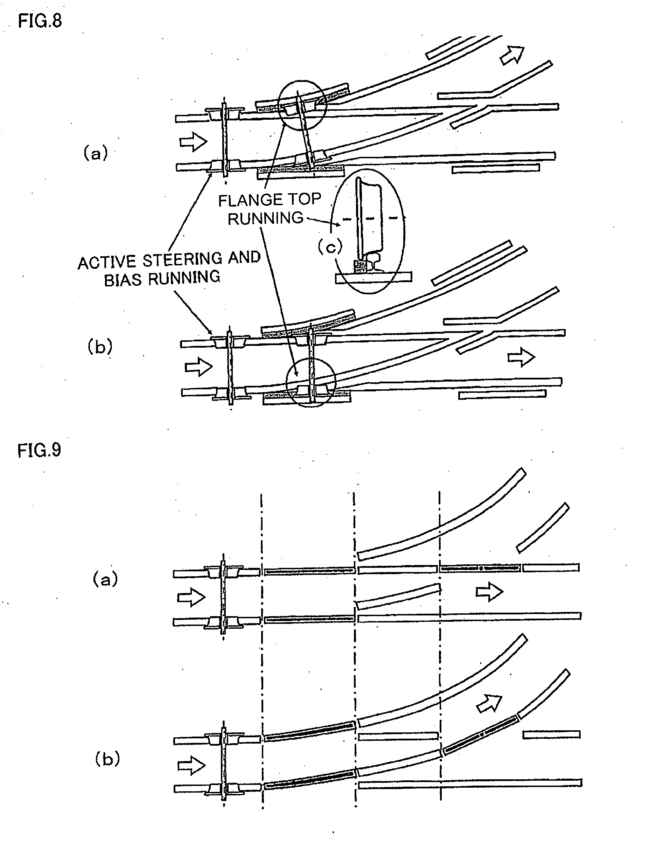

Figure 8 is a plan view of an on-vehicle branch portion that steers wheels to change a direction, Figure 8(a) shows a case of branching, Figure 8(b) shows a case of direct linear running, and Figure 8(c) shows an outer rail being placed on a flange rail. In this example, the flange rail is placed along an outer side of a rail break in the branch portion to prevent a gap from being created.

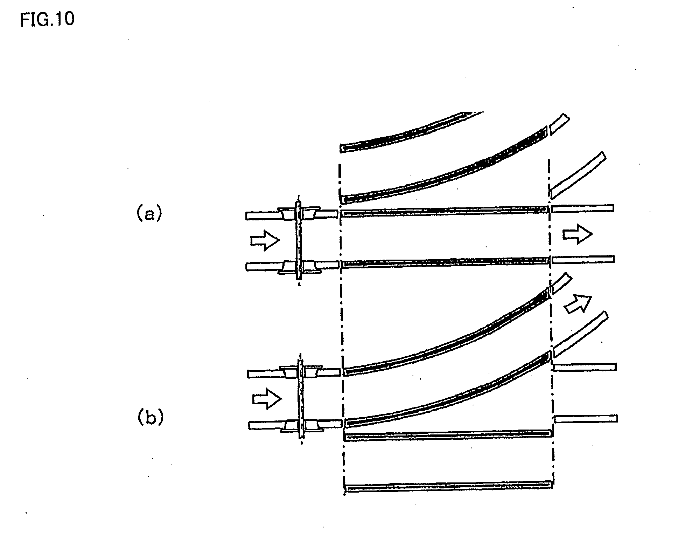

Figures 9 and 10 are plan views of a branch portion applicable both to an outer flange type and an inner flange type.

In the branch portion shown in Figure 9, one tongue rail is placed for each of the left and right track rails, and the tongue rail is oscillated for branching.

In the branch portion shown in Figure 10, the entire branch portion is switched by translation.

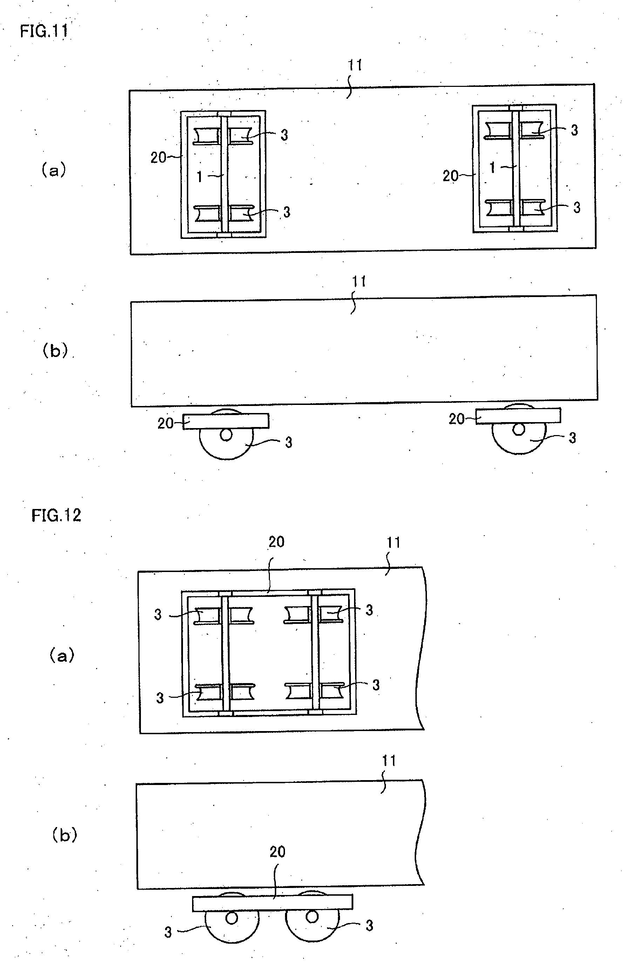

Figures 11(a) and 12(a) are plan views of a vehicle to which the self-steering bogie according to the present invention is mounted, and Figures 11(b) and 12(b) are side views thereof. In an embodiment shown in Figure 11, the front and rear of a vehicle 11 are supported by bogies each including a pair of left and right wheels. In an embodiment show in Figure 12, a pair of left and right wheels are provided on the front and rear of one bogie.

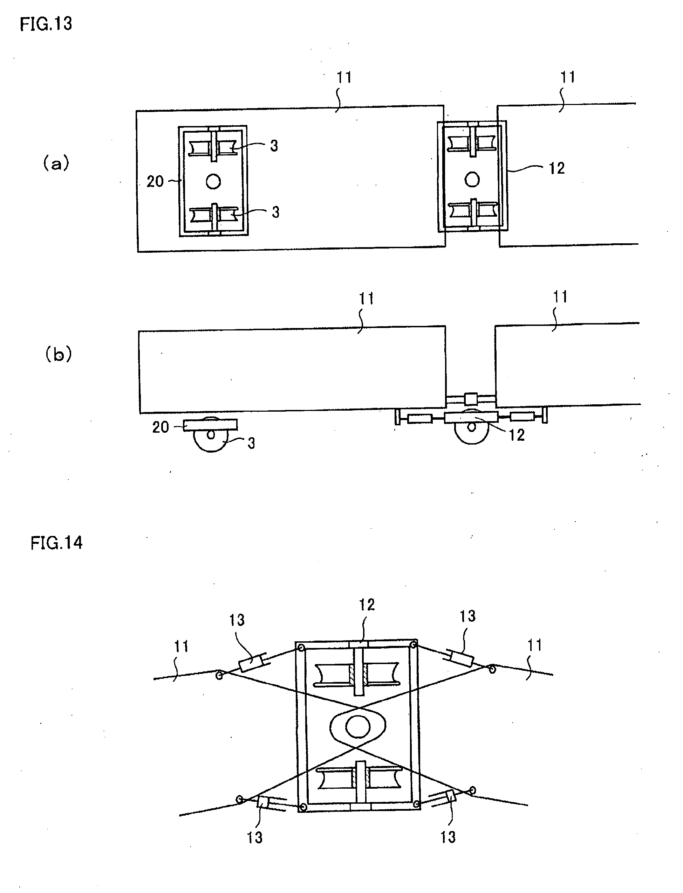

Figure 13(a) is a plan view of a railway vehicle according to a further embodiment of the present invention, Figure 13(b) is a side view thereof, Figure 14 is a plan view of a drive bogie placed at a joint between vehicles shown in Figure 13. In the railway vehicle, the self-steering bogies described above are used as first and last bogies and no drive force is applied to the bogies, while a drive bogie is used as a coupling bogie 12 between vehicles.

Then, the drive bogie 12 and the vehicles 11 are coupled by hydraulic cylinders 13 ..., and half of a relative yaw angle of adjacent vehicles is transferred to the drive bogie 12 to perform forced steering.

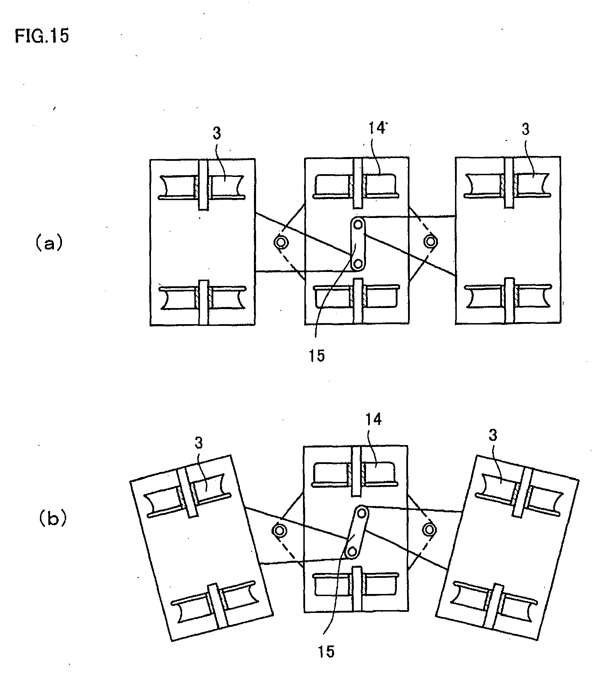

The above-described method of forced steering by the drive bogie 12 cannot be used for a single-vehicle train. Then, a structure shown in Figure 15 is supposed. Figure 15(a) is a plan view when a drive wheel is provided, and Figure 15(b) is a plan view showing a curving state. In this bogie, a wheel unit in which a steering wheel 3 having a tread inclined in an opposite direction as described above in one bogie, and a wheel unit including a drive wheel 14 are provided, and the wheel units are coupled by a link 15.

## Claims

1. A wheel unit comprising:
one axle (1); and
wheels (3),
wherein the wheels are mounted to opposite ends of the axle rotatably independently of each other, a tread (5) of each wheel in contact with a rail (4) is inclined so that a radius is gradually increased outward with reference to the rail, and a lateral gravitational restoring force (F1,F2) generated at a contact point between the rail and the tread during running acts outward with reference to the rail; **characterised in that** a shape of the tread (5) is set so that when the wheel unit is laterally displaced from a neutral position, a center of gravity position (G1) in the laterally displaced position is higher than a center of gravity position (G2) in the neutral position.

2. A wheel unit comprising:
two axles coaxially spaced apart; and
wheels,
wherein the wheels are mounted to the axles, respectively, rotatably independently of each other, a tread of each wheel in contact with a rail is inclined so that a radius is gradually increased outward with reference to the rail, and a lateral gravitational restoring force generated at a contact point between the rail and the tread during running acts outward with reference to the rail; **characterised in that** a shape of the tread (5) is set so that when the wheel unit is laterally displaced from a neutral position, a center of gravity position (G1) in the laterally displaced position is higher than a center of gravity position (G2) in the neutral position.

3. The wheel unit according to any one of claims 1 to 3, wherein the pair of left and right wheels are provided with flange portions (6) on an inner side with reference to the rail.

4. The wheel unit according to any one of claims 1 or 2, wherein the pair of left and right wheels are provided with flange portions on an outer side with reference to the rail.

5. A bogie wherein a wheel unit according to any one of claims 1 to 4 is supported by a frame (20).

6. A railway vehicle (11) wherein a vehicle body is supported on a bogie (12) according to claim 5.

7. A railway system comprising:
a railway vehicle (11) according to claim 6;
a rail (4); and
a branching device.

## Patentansprüche

1. Radeinheit, umfassend:
eine Achse (1); und
Räder (3),
wobei die Räder unabhängig voneinander drehbar an gegenüberliegenden Enden der Achse angebracht sind, wobei eine Lauffläche (5) in Kontakt mit einer Schiene (4) derart geneigt ist, dass ein Radius bezüglich der Schiene allmählich nach außen erhöht ist und eine seitliche Gravitationsrückstellkraft (F1, F2), die an einem Kontaktpunkt zwischen der Schiene und der Lauffläche erzeugt ist, während des Fahrens bezüglich der Schiene nach außen wirkt; **dadurch gekennzeichnet, dass** eine Form der Lauffläche (5) derart eingerichtet ist, dass, wenn die Radeinheit aus einer neutralen Position seitlich versetzt wird, eine Schwerpunktposition (G1) in der seitlich versetzten Position höher als eine Schwerpunktposition (G2) in der neutralen Position ist.

2. Radeinheit, umfassend:
zwei Achsen, die koaxial beabstandet sind; und
Räder,
wobei die Räder unabhängig voneinander drehbar jeweils an den Achsen angebracht sind, wobei eine Lauffläche in Kontakt mit einer Schiene derart geneigt ist, dass ein Radius bezüglich der Schiene allmählich nach außen erhöht ist und eine seitliche Gravitationsrückstellkraft, die an einem Kontaktpunkt zwischen der Schiene und der Lauffläche erzeugt ist, während des Fahrens bezüglich der Schiene nach außen wirkt; **dadurch gekennzeichnet, dass** eine Form der Lauffläche (5) derart eingerichtet ist, dass, wenn die Radeinheit aus einer neutralen Position seitlich versetzt wird, eine Schwerpunktposition (G1) in der seitlich versetzten Position höher als eine Schwerpunktposition (G2) in der neutralen Position ist.

3. Radeinheit nach einem der Ansprüche 1 bis 3, wobei das Paar rechter und linker Räder auf einer Innenseite bezüglich der Schiene mit Flanschabschnitten (6) versehen ist.

4. Radeinheit nach einem der Ansprüche 1 oder 2, wobei das Paar rechter und linker Räder auf einer Außenseite bezüglich der Schiene mit Flanschabschnitten versehen ist.

5. Drehgestell, wobei eine Radeinheit nach einem der Ansprüche 1 bis 4 durch einen Rahmen (20) gestützt ist.

6. Eisenbahnfahrzeug (11), wobei ein Fahrzeugaufbau auf einem Drehgestell (12) nach Anspruch 5 gestützt ist.

7. Eisenbahnsystem, umfassend:
ein Eisenbahnfahrzeug (11) nach Anspruch 6;
eine Schiene (4); und
eine Verzweigungsvorrichtung.

## Revendications

1. Unité formant roue comprenant :
un essieu (1) ; et
des roues (3),
dans laquelle les roues sont montées sur des extrémités opposées de l'essieu indépendamment en rotation l'une de l'autre, une bande de roulement (5) de chaque roue en contact avec un rail (4) est inclinée de sorte qu'un rayon est progressivement augmenté vers l'extérieur en se référant au rail, et une force de restauration latérale de gravitation (F1, F2) produite au niveau d'un point de contact entre le rail et la bande de roulement pendant l'avance agit vers l'extérieur en se référant au rail ; **caractérisée en ce qu'**une forme de la bande de roulement (5) est fixée de sorte que lorsque l'unité formant roue est déplacée latéralement à partir d'une position neutre, une position de centre de gravité (G1) dans la position déplacée latéralement est plus haute qu'une position de centre de gravité (G2) dans la position neutre.

2. Unité formant roue comprenant :
deux essieux espacés de façon coaxiale ; et
des roues,
dans laquelle les roues sont respectivement montées sur les essieux, indépendamment en rotation les unes des autres, une bande de roulement de chaque roue en contact avec un rail est inclinée de sorte qu'un rayon est progressivement augmenté vers l'extérieur en se référant au rail, et une force de restauration latérale de gravitation produite au niveau d'un point de contact entre le rail et la bande de roulement pendant l'avance agit vers l'extérieur en se référant au rail ; **caractérisé en ce qu'**une forme de la bande de roulement (5) est fixée de sorte que lorsque l'unité formant roue est déplacée latéralement à partir d'une position neutre, une position de centre de gravité (G1) dans la position déplacée latéralement est plus haute qu'une position de centre de gravité (G2) dans la position neutre.

3. Unité formant roue selon n'importe laquelle des revendications 1 à 3, dans laquelle les deux roues gauche et droite sont munies de parties formant rebords (6) sur un côté intérieur en se référant au rail.

4. Unité formant roue selon n'importe laquelle des revendications 1 ou 2, dans laquelle les deux roues gauche et droite sont munies de parties formant rebords sur un côté extérieur en se référant au rail.

5. Bogie dans lequel une unité formant roue selon n'importe laquelle des revendications 1 à 4 est supportée par un cadre (20).

6. Véhicule ferroviaire (11) dans lequel un châssis de véhicule est supporté sur un bogie (12) selon la revendication 5..

7. Système ferroviaire comprenant :
un véhicule ferroviaire (11) selon la revendication 6 ;
un rail (4) ; et
un dispositif d'aiguillage.
